# EUROPEAN PATENT SPECIFICATION

(11) **EP 4 382 243 B1**
(45) Date of publication and mention of the grant of the patent: **02.09.2026**
(21) Application number: 23835893.1
(22) Date of filing: 07.07.2023
(51) Int. Cl.: B23K 26/21, B23K 26/0622, B23K 26/03, B23K 31/12, B23K 26/06, H01M 50/204, H01M 50/211, B23K 26/24, B23K 101/00, B23K 101/36

(54) **WELDING DEVICE, WELDING METHOD, BATTERY MANUFACTURING DEVICE AND VEHICLE MANUFACTURING DEVICE**
SCHWEISSVORRICHTUNG, SCHWEISSVERFAHREN, BATTERIEHERSTELLUNGSVORRICHTUNG UND FAHRZEUGHERSTELLUNGSVORRICHTUNG
DISPOSITIF DE SOUDAGE, PROCÉDÉ DE SOUDAGE, DISPOSITIF DE FABRICATION DE BATTERIE ET DISPOSITIF DE FABRICATION DE VÉHICULE

(30) Priority: 08.07.2022 KR 20220084677; 21.10.2022 KR 20220136866
(43) Date of publication of application: 12.06.2024
(73) Proprietor: LG Energy Solution, Ltd., Seoul 07335 (KR)
(72) Inventor: LEE, Chang-Je, Daejeon 34122 (KR); KANG, Min-Jae, Daejeon 34122 (KR); KIM, Gu-Cheol, Daejeon 34122 (KR)
(74) Representative: Plasseraud IP
(86) International application number: PCT/KR2023/009708
(87) International publication number: WO 2024/010427

(56) References cited:
- JP-A- 2001 259 873
- JP-A- 2011 200 915
- JP-A- 2019 155 421
- JP-A- 2019 155 421
- JP-A- H06 210 472
- KR-A- 20120 009 058
- KR-A- 20180 125 544
- KR-A- 20180 125 544
- US-A1- 2004 026 381

## Description

The present invention relates to a welding device, a welding method, a battery manufacturing device and a vehicle manufacturing device (see claims 1, 7, 8 and 9 respectively), and more specifically, to a welding device and a welding method that may improve welding efficiency, and a battery manufacturing device and a vehicle manufacturing device including such a welding device.

The present application claims priority to Korean Patent Application No. 10-2022-0084677 filed on July 8, 2022 and Korean Patent Application No. 10-2022-0136866 filed on October 21, 2022.

### BACKGROUND ART

In general, a welding device includes a laser light source and optical components such as a focusing lens for increasing the energy density of the laser irradiated from the laser light source.

This welding device may be used, for example, for coupling components constituting a battery module. As an example, a battery module may be configured to create a dense structure by overlapping or stacking a plurality of battery cells (e.g., secondary batteries) in a state of being mounted on themselves or in a cartridge to provide high voltage and high current, and then electrically connect them.

In order to configure a battery module with a stable structure in such a battery module, it is important to perform good welding between a module case in which battery cells are accommodated and an end plate configured to cover a bus bar electrically connecting the battery cells. As an example, a welding device for keyhole welding of a welding portion (e.g., between the module case and the end plate) may be configured.

Meanwhile, in the case of conventional welding devices, welding between the module case and the end plate is performed by a continuous wave (CW) laser welding method. In the case of this CW laser welding method, the accumulation of heat input energy in the welding portion may increase according to the welding time. In this case, there is a problem that welding defects occur in the welding portion due to excessive accumulation of heat input energy in the welding portion.

US2004/026381 (describing the preamble of claims 1 and 7) according to its abstract, concerns a keyhole welding process using a laser performing output pulse modulation, wherein the welding is conducted in accordance with a frequency conforming to a natural frequency of a metal molten pool.

JP2011/200915, according to its abstract, discloses a material to be welded formed of an aluminum alloy which has the composition consisting of, by mass, 0.1-1.8% Mn, 0.4-1.2% Mg, 0.1-3.0% Cu, <0.3% Si, and <1.0% Fe, and the balance aluminum with inevitable impurities. A pair of the materials to be welded are arranged, and subjected to the pulse laser welding by applying pulse laser beam of two-stage waveform consisting of the first pulse laser beam and the second pulse laser beam to the materials to be welded. In the first and second pulse laser beams, the ratio P2/P1 of the peak output value is 0.3-0.6, and the ratio t2/t1 of the application time is ≥1.5.

### DISCLOSURE

### Technical Problem

The present invention is designed to solve the problems of the related art, and therefore the present disclosure is directed to providing a welding device and a welding method that may improve welding efficiency, and a battery manufacturing device and a vehicle manufacturing device including such a welding device.

However, technical problems to be solved by the present disclosure are not limited to the above-described problems, and other problems not mentioned herein may be clearly understood by those skilled in the art from the following description of the present disclosure.

### Technical Solution

A welding device according to a first aspect of the present invention is defined in claim 1, and includes a laser irradiation unit configured to irradiate a laser; and a laser power control unit configured to control the laser irradiation unit to irradiate a laser with peak power and a laser with base power to a welding portion.

The laser with peak power has an output capable of forming a keyhole in the welding portion, and the laser with base power has an output with which penetration is not formed in the welding portion.

Preferably, the laser power control unit may be configured to control the laser irradiation unit so that the welding portion remains in a liquid state.

Preferably, the laser power control unit may be configured to control the laser irradiation unit to alternately irradiate the laser with peak power and the laser with base power to the welding portion.

The laser with base power has an output capable of allowing the welding portion to remain in a liquid state.

Preferably, the laser power control unit may be configured to control the pulse width of the laser with base power.

Preferably, the laser power control unit may be configured to control the pulse frequency of the laser with base power.

Preferably, the laser power control unit may be configured to control the output of the laser with base power.

The welding device further includes an inspection unit configured to inspect a welding condition in the welding portion after completion of welding by the welding device, wherein the laser power control unit may be configured to control the output of the laser with base power according to the welding condition inspection information provided from the inspection unit.

The welding device further includes an inspection unit configured to inspect a welding condition in the welding portion during welding by the welding device, wherein the laser power control unit may be configured to control the output of the laser with base power according to the welding condition inspection information provided from the inspection unit.

A welding method according to a second aspect of the present invention is defined in claim 7, and includes a step of irradiating a laser with peak power to a welding portion; and a step of irradiating a laser with base power to the welding portion. The laser with peak power has an output capable of forming a keyhole in the welding portion, and the laser with base power has an output with which penetration is not formed in the welding portion

A battery manufacturing device according to a third aspect of the present invention is defined in claim 8, and includes a welding device according to the first aspect of the present invention as described above.

A vehicle manufacturing device according to a fourth aspect of the present invention includes a welding device according to the first aspect of the present invention as described above.

### Advantageous Effects

According to an embodiment of the present disclosure, while minimizing welding defects by preventing excessive accumulation of heat input energy in the welding portion compared to the prior art, the laser absorption rate of the welding portion may be increased by keeping the welding portion in a liquid state during the welding process, thereby maintaining the same welding speed and welding productivity as in the prior art.

In addition, several other additional effects may be achieved by various embodiments of the present invention

These various effects of the present invention will be described in detail in each embodiment, or descriptions of effects that may be easily understood by those skilled in the art will be omitted.

### DESCRIPTION OF DRAWINGS

The accompanying drawings illustrate a preferred embodiment of the present invention and together with the foregoing disclosure, serve to provide further understanding of the technical features of the present disclosure, and thus the present disclosure is not construed as being limited to the drawing.
FIG. 1 is a view showing a welding device according to an embodiment.
FIG. 2 is a view showing a change in laser output by the welding device of FIG. 1.
FIG. 3 is a view showing the generation of a keyhole in a welding portion according to a change in laser output in FIG. 2.
FIG. 4 is a view showing a difference in the amount of energy accumulated in the welding portion according to the laser oscillation mode.
FIG. 5 is a view showing a change in laser output according to oscillation of a conventional pulse laser.
FIG. 6 is a view showing the laser absorption rate of pure aluminum according to temperature change.
FIG. 7 is a view showing a simulation result for the boundary values of heat conduction welding and keyhole welding.
FIG. 8 is a view exemplarily showing a change in the pulse width of a laser by control of a laser power control unit provided in the welding device of FIG. 1.
FIG. 9 is a view exemplarily showing a change in the pulse frequency of a laser by control of a laser power control unit provided in the welding device of FIG. 1.
FIG. 10 is a view exemplarily showing a change in laser output by control of a laser power control unit provided in the welding device of FIG. 1.
FIGS. 11 and 12 are views showing another control method of a laser by the welding device.

### BEST MODE

Hereinafter, preferred embodiments will be described in detail with reference to the accompanying drawings.

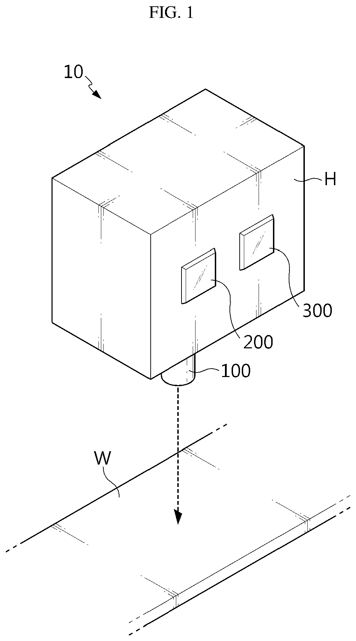

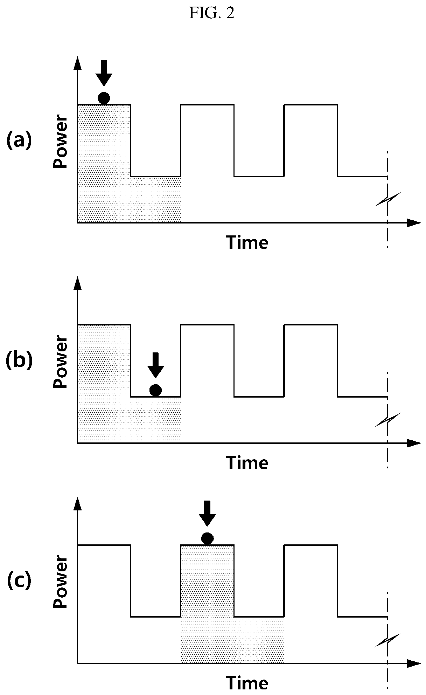

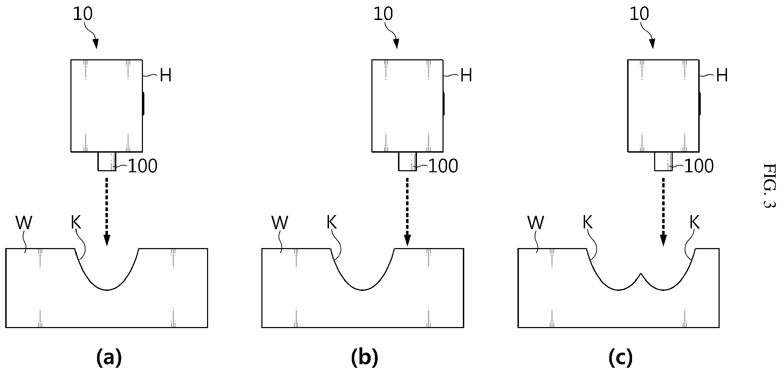

FIG. 1 is a view showing a welding device 10 according to an embodiment, FIG. 2 is a view showing a change in laser output by the welding device 10 of FIG. 1, and FIG. 3 is a view showing the generation of a keyhole in a welding portion according to a change in laser output in FIG. 2.

Referring to FIGS. 1 to 3, the welding device 10 according to an embodiment is configured to perform welding at the welding portion W by irradiating a laser.

As an example, the welding portion W may mean a coupling portion between components of a battery module (not shown). In this case, the battery module may include at least one secondary battery therein.

Illustratively, welding between components of the battery module may be performed by a known keyhole welding method. More specifically, the welding device 10 may perform welding between a module case (not shown) and an end plate (not shown) of a battery module for accommodating a secondary battery therein, but is not limited thereto.

Illustratively, the module case and the end plate may include an aluminum material. That is, the welding portion W may include an aluminum material. However, the welding portion W is not limited to aluminum and may also include aluminum and an alloy thereof.

As shown in FIG. 1, the welding device 10 may include a laser irradiation unit 100 and a laser power control unit 200. A portion of this laser irradiation unit 100 may be accommodated in the housing H. In addition, the laser power control unit 200 may be provided on the outer surface of the housing H.

The laser irradiation unit 100 may be configured in the form of an optical system to irradiate a laser. Although not shown in detail, the laser may be irradiated in the form of a beam to the welding portion W.

In an embodiment, the laser irradiation unit 100 may include a laser light source (not shown) and a focusing lens (not shown).

The laser light source may generate the laser.

The focusing lens may improve the energy density of the laser generated from the laser light source. In this case, the laser may pass through the focusing lens and be irradiated to the welding portion W.

The laser power control unit 200 controls the laser irradiation unit 100 to irradiate a laser with peak power and a laser with base power to the welding portion W, as shown in FIG. 2. Here, the base power may be a power having a lower magnitude than the peak power. That is, the laser power control unit 200 may control the laser irradiation unit 100 to irradiate different magnitudes of power to the same welding portion W. As an example, the laser power control unit 200 may include a processor.

In addition, as shown in FIG. 3, the laser irradiation unit 100 may irradiate a laser with peak power and a laser with base power so that two or more keyholes K may be formed by overlapping for one welding line in the welding portion W under the control of the laser power control unit 200. Here, the keyhole K utilizes multiple reflection and absorption of energy in the focal section of the laser beam and may be formed approximately in the shape of a key hole. In this case, the housing H may be moved by a separate moving stage (not shown) so that the laser irradiation unit 100 may irradiate the laser to the welding portion W while moving for one welding line.

Also, after welding is completed for one welding line, the housing H accommodating the laser irradiation unit 100 may be moved to another welding line on the welding portion W. Thereafter, the laser irradiation unit 100 may repeatedly perform the above-described operation for another welding line on the welding portion W under the control of the laser power control unit 200.

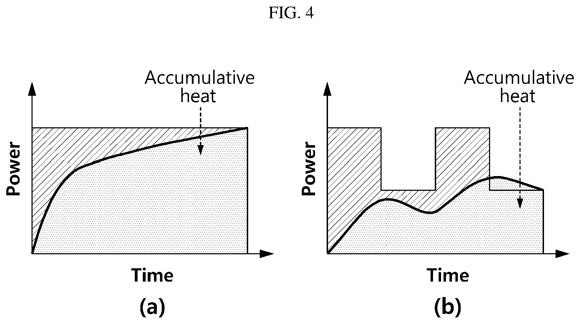

As shown in FIG. 4 (a), in the case of a conventional continuous wave (CW) laser welding method, excessive energy is accumulated in the welding portion as the laser irradiation time to the welding portion increases. At this time, the displayed area in the graph of FIG. 4 (a) means the heat input energy accumulated in the welding portion according to the laser irradiation time.

In this case, the welding metal (the portion of the metal that melted and solidified during welding as a portion of the welding portion) in the welding portion may be excessively penetrated, thereby causing a meltdown phenomenon where the welding metal falls locally.

Meanwhile, referring to FIG. 4 (b), in the case of the laser welding method by the welding device 10, it can be said that the laser irradiation unit 100 irradiates a laser with peak power and a laser with base power to the welding portion W. Therefore, compared to the conventional CW laser welding method, the accumulation of heat input energy in the welding portion W according to the laser irradiation time may be achieved relatively slowly. This laser welding method by the welding device 10 of the present disclosure is a laser irradiation method in the form of combining the CW laser welding method and the pulse wave (PW) laser welding method, and can be referred to as a quasi-pulse laser welding method.

That is, the welding method according to the welding device 10 includes the step of irradiating a laser with peak power to the welding portion W and the step of irradiating a laser with base power to the welding portion W.

When the laser is irradiated to the welding portion W in this quasi-pulse mode, a laser with base power having a relatively lower output than a laser with peak power may be irradiated to the welding portion W between the sections where the laser with peak power is irradiated to the welding portion W. Therefore, in the case of the welding device 10 of the present disclosure, welding defects may be minimized by preventing excessive accumulation of heat input energy in the welding portion W.

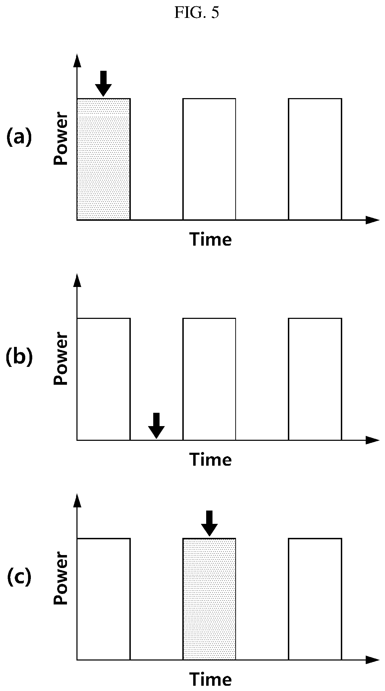

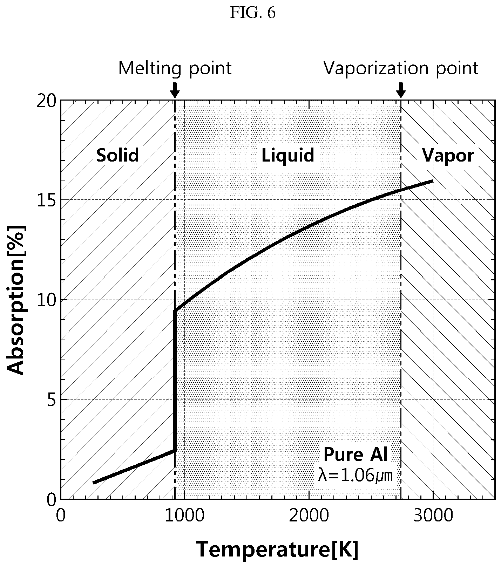

FIG. 5 is a view showing a change in laser output according to oscillation of a conventional pulse laser, and FIG. 6 is a view showing the laser absorption rate of pure aluminum according to temperature change.

Referring to FIG. 5, in the case of the conventional PW laser welding method, a pulse laser is irradiated to the welding portion in a periodically turned on/off manner.

As indicated by an arrow in FIG. 5 (a) in the PW laser welding method, in the section where the oscillation of the pulse laser is on, the welding portion is melted by irradiation of the pulse laser and changes from a solid state to a liquid state. At this time, it can be said that a keyhole is generated in the welding portion.

On the other hand, as indicated by an arrow in FIG. 5 (b), in the section where the oscillation of the pulse laser is off, there is no energy input to the welding portion, so it can be said that the welding portion changes from a liquid state to a solid state again.

Referring to FIG. 6, when a pulse laser is oscillated at a certain wavelength (e.g., 1.06 µm) for pure aluminum, the absorption rate of the laser in a solid state of the welding portion may be at least 3.8 times lower than that in a liquid state of the welding portion based on the melting point of pure aluminum.

Accordingly, as indicated by an arrow in FIG. 5 (c), in the section where the oscillation of the pulse laser is turned on again, the welding portion that has changed to a solid state in the section of FIG. 5 (b) may need to be melted again. Therefore, the laser absorption rate of the welding portion in the solid state is relatively lower than the laser absorption rate of the welding portion in the liquid state, and thus the melting efficiency is lowered. As a result, there is a problem of slowing down the welding speed.

On the other hand, the laser power control unit 200 provided in the welding device 10 may be configured to control the laser irradiation unit 100 so that the welding portion W remains in a liquid state.

That is, in the welding device 10, the laser power control unit 200 may control the laser irradiation unit 100 to sequentially irradiate the laser with peak power and the laser with the base power to the welding portion W, so as to induce the welding portion W to remain in a liquid state without changing from the liquid state to the solid state. To this end, in the case of the welding device 10, unlike the conventional PW laser welding method, it is possible to prevent the occurrence of a section in which the laser oscillation is completely turned off.

Specifically, referring to the portion indicated by an arrow in FIG. 2 (a), under the control of the laser power control unit 200, the laser irradiation unit 100 may irradiate a laser with peak power to the welding portion W. Accordingly, the welding portion W may melt and change from a solid state to a liquid state. At this time, a keyhole K may be generated in the welding portion W, as shown in FIG. 3 (a).

In addition, referring to the portion indicated by an arrow in FIG. 2 (b), under the control of the laser power control unit 200, the laser irradiation unit 100 may irradiate a laser with base power to the welding portion W. In this way, by irradiating a laser with base power having a relatively lower output than a laser with peak power to the welding portion W, it is possible to suppress the change of the welding portion W from the liquid state to the solid state again.

In this case, additional penetration may not occur in the welding portion W, as shown in FIG. 3 (b). This will be described in more detail in the related description below.

In addition, referring to the portion indicated by an arrow in FIG. 2 (c), under the control of the laser power control unit 200, the laser irradiation unit 100 may irradiate a laser with peak power to the welding portion W again. At this time, the liquid state of the welding portion W is maintained by the irradiation of the laser with base power in of FIG. 2 (b), and thus, when irradiating the laser with peak power as shown in FIG. 2 (c), a keyhole K may be generated in the welding portion W more easily. Meanwhile, as shown in FIG. 3 (c), a keyhole K may be formed in the welding portion W by overlapping at least a portion of the keyhole K generated in FIG. 3 (a).

According to this embodiment, while minimizing welding defects by preventing excessive accumulation of heat input energy in the welding portion W compared to the prior art, the laser absorption rate of the welding portion W may be increased by keeping the welding portion W in a liquid state during the welding process, thereby maintaining the same welding speed and welding productivity as in the prior art.

Referring to FIG. 2 again, the laser power control unit 200 may control the laser irradiation unit 100 to alternately irradiate a laser with peak power and a laser with base power to the welding portion W.

Specifically, the laser irradiation unit 100 may alternately and continuously irradiate a laser with peak power and a laser with base power to the welding portion W under the control of the laser power control unit 200.

Accordingly, while injecting less energy into the welding portion W than in the prior art, there may be no section in which laser irradiation is turned off, thereby allowing the welding portion W to remain in a liquid state during the welding process more reliably.

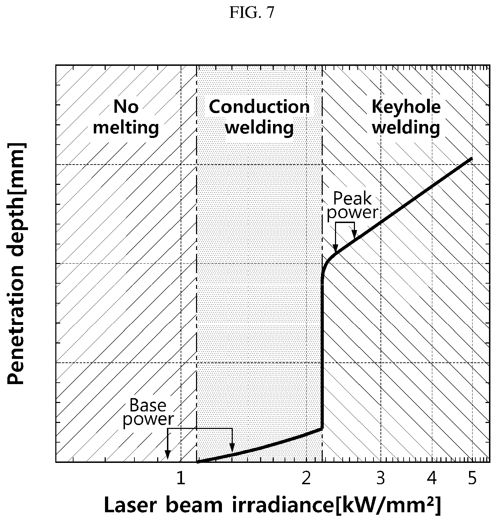

FIG. 7 is a view showing a simulation result for the boundary values of heat conduction welding and keyhole welding.

Referring to FIG. 7, in the welding device 10, a laser with peak power may have an output capable of forming a keyhole K in the welding portion W. In addition, a laser with base power may have an output that does not cause penetration in the welding portion W. That is, the laser with base power may have an output that hardly forms a penetration depth in the welding portion W, as shown in FIG. 7. Therefore, since the laser with base power may have an output that hardly forms a penetration depth in the welding portion W as shown in FIG. 7, it can be said to have an output that does not form penetration in the welding portion W. Meanwhile, when the output of the laser irradiated from the laser irradiation unit 100 is less than the output value at which the keyhole K is formed, the welding portion W may be welded in the form of heat conduction welding.

As an example, the peak power in the welding device 10 may be set to 2.2 kW/mm² or more. In the case of the above peak power value, it may be the minimum value at which the keyhole K may be formed in the welding portion W including an aluminum material. In addition, the base power in the welding device may be set within a range of approximately 0.92 kW/mm² to 1.42 kW/mm².

That is, in the welding device 10, in the section where a laser with base power is irradiated to the welding portion W, it is possible to keep the welding portion W in a liquid state using only a laser with base power of low power that does not form penetration of the welding portion W. This can be seen in FIG. 7 that no penetration depth of the welding portion W occurs or the penetration depth of the welding portion W is very small when a laser with base power (e.g., output range of 0.92 kW/mm² to 1.42 kW/mm²) is irradiated to the welding portion W.

Therefore, the penetration depth in the keyhole K formed in the laser irradiation section of FIG. 3 (c) may be approximately the same as the penetration depth in the keyhole K formed in the laser irradiation section of FIG. 3 (a).

According to this embodiment, by alternately irradiating a laser with peak power and a laser with base power to the welding portion W, it is possible to prevent excessive penetration in a specific area of the welding portion W by keeping penetration from being formed in the welding portion W in the section where the laser with base power is irradiated to the welding portion W while achieving the same welding speed as compared to the prior art. Accordingly, welding defects caused by meltdown may be minimized.

The laser with base power has an output capable of allowing the welding portion W to remain in a liquid state.

That is, the laser with base power may have a minimum output capable of allowing the welding portion W to remain in a liquid state during the process of alternately irradiating the laser with peak power and the laser with base power to the welding portion W.

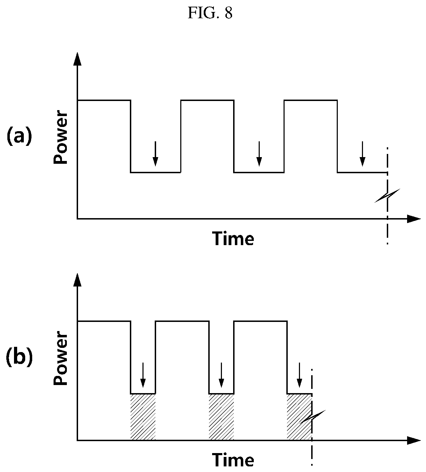

FIG. 8 is a view exemplarily showing a change in the pulse width of a laser by control of a laser power control unit 200 provided in the welding device 10 of FIG. 1. In this case, FIG. 8 (a) shows a state before the pulse width of the laser with base power is adjusted, and FIG. 8 (b) shows a state after the pulse width of the laser with base power is adjusted.

Referring to FIG. 8, the laser power control unit 200 of the welding device may be configured to control the pulse width of the laser with base power.

In an embodiment, when the welding portion W includes a material (e.g., a metal material having a lower melting point than aluminum, and the like) that reacts more sensitively to the laser, penetration may occur in the welding portion W in the section where the laser with base power in the illustrated output range (an output range of 0.92 kW/mm² to 1.42 kW/mm²) is irradiated to the welding portion W.

In this case, the laser power control unit 200 may prevent penetration from being formed in the welding portion W in the section where the laser with base power is irradiated to the welding portion W by adjusting the pulse width of the laser with base power according to the characteristics of the welding portion W. Illustratively, when the welding portion W includes a material that reacts more sensitively to the laser, the laser power control unit 200 may adjust the pulse width of the laser with base power to be smaller, as shown in the portion indicated by arrows and shades in FIG. 8 (b).

According to this embodiment, excessive penetration in a specific area of the welding portion W may be prevented by controlling the pulse width of the laser with base power according to the characteristics of the welding portion W. Accordingly, welding defects caused by meltdown may be minimized.

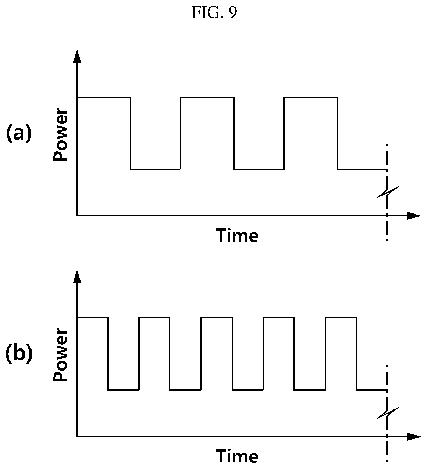

FIG. 9 is a view exemplarily showing a change in the pulse frequency of a laser by control of a laser power control unit 200 provided in the welding device 10 of FIG. 1. In this case, FIG. 9 (a) shows a state before the pulse frequency of the laser with base power is adjusted, and FIG. 9 (b) shows a state after the pulse frequency of the laser with base power is adjusted.

Referring to FIG. 9, the laser power control unit 200 may be configured to control the pulse frequency of the laser with base power.

As described above, the laser irradiation unit 100 may irradiate the laser with peak power and the laser with base power so that two or more keyholes K may be formed by overlapping each other for one welding line in the welding portion W under the control of the laser power control unit 200, as shown in FIG. 3.

In the welding device 10, when the pulse frequency of the laser with base power is adjusted, the overlap area between at least two keyholes K in the welding portion W may be changed. At this time, the laser irradiation unit 100 alternately irradiates the laser with peak power and the laser with base power to the welding portion W, and thus, when the pulse frequency of the laser with base power is adjusted, the pulse frequency of the laser with peak power may also be adjusted.

Illustratively, the laser power control unit 200 may adjust the pulse frequency of the laser with base power to increase, as shown in FIG. 9 (b). At this time, the pulse frequency of the laser with peak power may also be adjusted to increase.

According to this embodiment, when the pulse frequency of the laser with base power is increased, the overlap area of the keyhole K in the welding portion W may be increased, and thus welding in the welding portion W may be made more stably. In addition, when the welding area in the welding portion W is small, excessive accumulation of heat input energy in the welding portion W may be minimized while increasing the pulse frequency of the laser with base power to increase the welding speed.

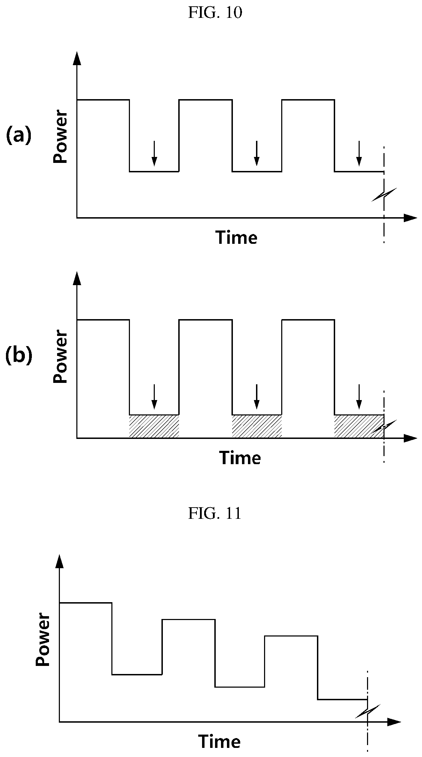

FIG. 10 is a view exemplarily showing a change in laser output by control of a laser power control unit 200 provided in the welding device 10 of FIG. 1. In this case, FIG. 10 (a) shows a state before the output of the laser with base power is adjusted, and FIG. 10 (b) shows a state after the output of the laser with base power is adjusted.

Referring to FIG. 10, the laser power control unit 200 is configured to control the output of the laser with base power.

In an embodiment, when the welding portion W includes a material (e.g., a metal material having a lower melting point than aluminum, and the like) that reacts more sensitively to the laser, penetration may occur in the welding portion W in the section where the laser with base power in the illustrated output range (an output range of 0.92 kW/mm² to 1.42 kW/mm²) is irradiated to the welding portion W.

In this case, the laser power control unit 200 may prevent penetration from being formed in the welding portion W in the section where the laser with base power is irradiated to the welding portion W by adjusting the output of the laser with base power according to the characteristics of the welding portion W. Illustratively, when the welding portion W includes a material that reacts more sensitively to the laser, the laser power control unit 200 may adjust the output of the laser with base power to be smaller, as shown in the portion indicated by arrows and shades in FIG. 10 (b).

According to this embodiment, excessive penetration in a specific area of the welding portion W may be prevented by controlling the output of the laser with base power according to the characteristics of the welding portion W. Accordingly, welding defects caused by meltdown may be minimized.

Referring to FIG. 1, the welding device 10 further includes an inspection unit 300.

The inspection unit 300 is configured to inspect a welding condition of the welding portion W after completion of welding by the welding device 10. As an example, the inspection unit 300 may include a processor, a camera (e.g., an infrared camera), an X-ray transmission device, and the like. Also, the inspection unit 300 may be provided on the outer surface of the housing H described above.

For example, when the inspection unit 300 senses the occurrence of excessive penetration in a specific area of the welding portion W after completion of welding by the welding device 10, the inspection unit 300 may transmit such welding condition inspection information to the laser power control unit 200.

At this time, the laser power control unit 200 is configured to control the output of the laser with base power according to the welding condition inspection information provided from the inspection unit 300. That is, the laser power control unit 200 may control the output of the laser with base power so that welding defects or the like do not occur during the next step of welding by the welding device 10.

Meanwhile, the laser power control unit 200 may also be configured to control the pulse width or pulse frequency of the laser with base power according to the welding condition inspection information provided from the inspection unit 300.

Meanwhile, the inspection unit 300 is configured to inspect a welding condition at the welding portion W during welding by the welding device 10.

For example, when the inspection unit 300 senses the occurrence of excessive penetration in a specific area of the welding portion W during welding by the welding device 10, the inspection unit 300 may transmit such welding condition inspection information to the laser power control unit 200.

At this time, the laser power control unit 200 is configured to control the output of the laser with base power according to the welding condition inspection information provided from the inspection unit 300. That is, the laser power control unit 200 may control the output of the laser with base power so that no further welding defects or the like occur during welding by the welding device 10.

Meanwhile, the laser power control unit 200 may also be configured to control the pulse width or pulse frequency of the laser with base power according to the welding condition inspection information provided from the inspection unit 300.

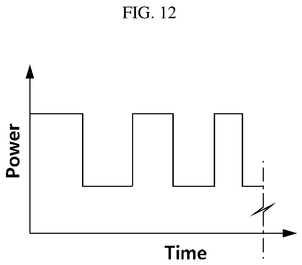

FIGS. 11 and 12 are views showing another control method of a laser by the welding device 10.

The laser with base power is irradiated to the welding portion W between sections in which the laser with peak power is irradiated to the welding portion W, so that the liquid state of the welding portion W may be maintained throughout the entire welding process.

At this time, in the case of the welding device 10, the laser power control unit 200 may also control the irradiation of the laser by the laser irradiation unit 100 so that the output of the laser with peak power and the laser with base power is reduced over time, as shown in FIG. 11. Alternatively, in the case of the welding device 10, the laser power control unit 200 may also control the irradiation of the laser by the laser irradiation unit 100 so that the pulse width of the laser with peak power and the laser with base power is reduced over time, as shown in FIG. 12. In addition, in the case of the welding device 10, the laser power control unit 200 may also control the irradiation of the laser by the laser irradiation unit 100 so that both the output and the pulse width of the laser with peak power and the laser with base power are reduced over time.

In this way, in the case of the welding device 10, even if the irradiation of the laser is controlled as shown in FIGS. 11 or 12, the liquid state of the welding portion W is maintained by the irradiation of the laser with base power to the welding portion W. Therefore, welding defects are minimized while injecting less energy into the welding portion W than in the prior art.

Hereinafter, in order to show the effect of the welding device 10 more specifically, it will be described in more detail with reference to examples and comparative examples.

### (Examples 1 to 10)

As shown in FIG. 1, welding was performed on the welding portion W using a welding device (model name: laser (Trumpf TruDiode 4006), optical system (Trumpf BEO D70 0° K200 F200 T950)).

At this time, in all examples, the welding portion W was made of pure aluminum, and the top/bottom of the extruded mono-frame AL6063 had a thickness of 2.0 mm, and the side had a thickness of 3.2 mm. In addition, the endplate ADC12 manufactured by die-cast was processed to correspond to the thickness of each side of the monoframe. Also, the total length of the welding portion W was set to 562 mm on one side and 1124 mm on both sides. And, the overall width of the welding portion W was set to a bead width of 2.0 to 4.0 mm. In addition, the length of one welding line was set to 80 mm on the top, 96 mm on the side, and 210 mm on the bottom. Also, the welding portion W was a coupling portion between the components of a battery module (not shown). Specifically, the welding portion W was a coupling portion between a module case (not shown) and an end plate (not shown).

In addition, as shown in FIG. 2, the welding device was set to irradiate a laser with peak power and a laser with base power to the welding portion W alternately and continuously. At this time, the output of the laser with peak power was set to 3300 W ± 200 W in the section with a thickness of 2.0 mm on the top/bottom, and 3600 W ± 200 W in the section with a thickness of 3.2 mm on the side. The output of the laser with base power was set to 1200 W ± 200 W in the section with a thickness of 2.0 mm on the top/bottom, and 2000 W ± 200 W in the section with a thickness of 3.2 mm on the side. In addition, the number of welding in one welding line was once, the welding speed for one welding line was 60 mm/sec, the total welding length was 1124 mm, and the total welding time was 18.7 seconds. Also, the number of welding for one welding portion W including at least one welding line was once, and the total welding time for one welding portion W was 1.33 seconds in the 80 mm section on the top, 1.6 seconds in the 96 mm section on the side, and 3.5 seconds in the 210 mm section on the bottom. In addition, the irradiation time of the laser with peak power and the irradiation time of the laser with base power were set at the same ratio.

In addition, as shown in FIG. 3, the welding device was set to alternately irradiate a laser with peak power and a laser with base power so that two or more keyholes K may be formed by overlapping with each other for one welding line.

Welding was performed in the above-described manner to form a welding portion W, and welding quality was measured for the formed welding portion W. More specifically, a plurality of samples were produced in the above-described manner for each week over a period of 10 weeks, and the number of samples in which welding defects occurred for the welding portion W of the produced samples was counted, whereby the counted results are shown in Table 1. That is, Table 1 shows the number of battery modules, which were indicated as Examples 1 to 10 for each week and were produced for one week for each example, and the number of welding defects (e.g., meltdown) in the produced battery modules, that is, in the welding portion W included in each sample, as data tested over a total of 10 weeks.

### (Comparative Example)

Meanwhile, in the case of the comparative example, welding was performed by irradiating only the laser with peak power to the welding portion using the conventional pulse wave (PW) laser welding method shown in FIG. 5. At this time, the welding portion was made of pure aluminum, and the top/bottom of the extruded mono-frame AL6063 had a thickness of 2.0 mm, and the side had a thickness of 3.2 mm. In addition, the endplate ADC12 manufactured by die-cast was processed to correspond to the thickness of each side of the monoframe. Also, the total length of the welding portion was set to 562 mm on one side and 1124 mm on both sides. And, the overall width of the welding portion was set to a bead width of 2.0 to 4.0 mm. In addition, the length of one welding line was set to 80 mm on the top, 96 mm on the side, and 210 mm on the bottom. Also, the welding portion was a coupling portion between the components of a battery module (not shown). Specifically, the welding portion was a coupling portion between a module case (not shown) and an end plate (not shown).

In addition, the output of the laser with peak power was set to 3300 W ± 200 W in the section with a thickness of 2.0 mm on the top/bottom, and 3600 W ± 200 W in the section with a thickness of 3.2 mm on the side. In addition, the number of welding in one welding line was once, the welding speed for one welding line was 10 mm/sec, the total welding length was 1124 mm, and the total welding time was 112.4 seconds. Also, the number of welding for one welding portion including at least one welding line was once, and the total welding time for one welding portion was 8 seconds in the 80 mm section on the top, 9.6 seconds in the 96 mm section on the side, and 21 seconds in the 210 mm section on the bottom. In addition, the irradiation time of the laser with peak power and the time in the section where the laser is not irradiated were set at the same ratio.

**[Table 1]**

| | Battery module production volume per week (units) | Number of welding defects in welding portion (times) |
|---|---|---|
| Example 1 | 2,560 | 1 |
| Example 2 | 15,285 | 6 |
| Example 3 | 16,987 | 7 |
| Example 4 | 20,200 | 0 |
| Example 5 | 20,416 | 7 |
| Example 6 | 21,421 | 8 |
| Example 7 | 30,562 | 9 |
| Example 8 | 28,093 | 6 |
| Example 9 | 34,220 | 9 |
| Example 10 | 23,889 | 3 |
| Comparative Example | 10,040 | 27 |

Referring to the results in Table 1 above, it can be seen that the occurrence rate of welding defects was very low in Examples 1 to 10, whereas the occurrence rate of welding defects was significantly higher compared to Examples 1 to 10 in the case of Comparative Example.

More specifically, in Example 1, 2,560 battery modules were produced in one week, in which case, the number of welding defects in the welding portion W was once. In this case, the occurrence rate of welding defects is only about 0.04%.

In Example 2, 15,285 battery modules were produced in one week, in which case, the number of welding defects in the welding portion W was 6 times. In this case, the occurrence rate of welding defects is only about 0.04%.

In Example 3, 16,987 battery modules were produced in one week, in which case, the number of welding defects in the welding portion W was 7 times. In this case, the occurrence rate of welding defects is only about 0.04%.

In Example 4, 20,200 battery modules were produced in one week, in which case, the number of welding defects in the welding portion W was zero.

In Example 5, 20,416 battery modules were produced in one week, in which case, the number of welding defects in the welding portion W was 7 times. In this case, the occurrence rate of welding defects is only about 0.03%.

In Example 6, 21,421 battery modules were produced in one week, in which case, the number of welding defects in the welding portion W was 8 times. In this case, the occurrence rate of welding defects is only about 0.04%.

In Example 7, 30,562 battery modules were produced in one week, in which case, the number of welding defects in the welding portion W was 9 times. In this case, the occurrence rate of welding defects is only about 0.03%.

In Example 8, 28,093 battery modules were produced in one week, in which case, the number of welding defects in the welding portion W was 6 times. In this case, the occurrence rate of welding defects is only about 0.02%.

In Example 9, 34,220 battery modules were produced in one week, in which case, the number of welding defects in the welding portion W was 9 times. In this case, the occurrence rate of welding defects is only about 0.03%.

In Example 10, 23,889 battery modules were produced in one week, in which case, the number of welding defects in the welding portion W was 3 times. In this case, the occurrence rate of welding defects is only about 0.01%.

That is, referring to Table 1 above, it was found that the number of welding defects in the welding portion W is almost zero (less than 10 times) regardless of the production volume of the battery module for each example.

In particular, when producing 2,560 products at week 22 of Example 1, one welding defect occurred, but when producing 30,562 products at week 28 of Example 7, only 9 welding defects occurred even though the production volume was increased by more than 10 times compared to Example 1.

On the other hand, referring to Table 1 above, in the case of the Comparative Example, the number of welding defects occurring in the welding portion for battery modules produced for one week during the mass production process of the battery module is shown.

Specifically, in the case of the Comparative Example, 10,040 battery modules were produced in one week, in which case, the number of welding defects in the welding portion was 27 times. In this case, the occurrence rate of welding defects amounts to about 0.27%.

And, this occurrence rate of welding defects can be said to be significantly higher than the average occurrence rate of welding defects amounting to 0.028% in Examples 1 to 10.

In particular, in the case of the Comparative Example, it was found that more welding defects occurred than in Example 1, which was about 20% of the number of products produced in the Comparative Example.

In addition, in the case of the Comparative Example, it was found that more welding defects occurred than in Example 2, which produced about 5,000 more products than the number of products produced in the Comparative Example.

As can be seen from these results, in the case of the welding device 10 according to an embodiment, welding defects in the welding portion W may be minimized compared to the conventional laser welding method.

The battery manufacturing device according to the present invention includes the welding device 10 described above. Also, the battery manufacturing device may further include various devices (e.g., a battery module inspection device) known in the art for manufacturing battery modules in addition to the welding device 10 described above.

The vehicle manufacturing device according to the present invention includes the welding device 10 described above. Also, the vehicle manufacturing device according to the present disclosure may further include various devices (e.g., a vehicle inspection device) known in the art for manufacturing vehicles in addition to the welding device 10 described above.

While the present invention has been hereinabove described with regard to a limited number of embodiments and drawings, the present invention is not limited thereto and it is obvious to those skilled in the art that a variety of modifications and changes may be made thereto within the scope of the present invention as defined in the appended claims.

## Claims

1. A welding device (10) comprising:
a laser irradiation unit (100) configured to irradiate a laser; and
a laser power control unit (200) configured to control the laser irradiation unit (100) to irradiate a laser with peak power and a laser with base power to a welding portion (W),
**characterised in that** the laser with peak power has an output capable of forming a keyhole (K) in the welding portion (W), and
the laser with base power has an output with which penetration is not formed in the welding portion (W),
wherein the laser with base power has an output capable of allowing the welding portion (W) to remain in a liquid state,
wherein the welding device (10) further comprises an inspection unit (300) configured to inspect a welding condition in the welding portion during welding or after completion of welding by the welding device (10), and
wherein the laser power control unit (200) is configured to control the output of the laser with base power according to the welding condition inspection information provided from the inspection unit (300).

2. The welding device according to claim 1,
wherein the laser power control unit (200) is configured to control the laser irradiation unit so that the welding portion (W) remains in a liquid state.

3. The welding device according to claim 1,
wherein the laser power control unit (200) is configured to control the laser irradiation unit (100) to alternately irradiate the laser with peak power and the laser with base power to the welding portion (W).

4. The welding device according to claim 1,
wherein the laser power control unit (200) is configured to control the pulse width of the laser with base power.

5. The welding device according to claim 1,
wherein the laser power control unit (200) is configured to control the pulse frequency of the laser with base power.

6. The welding device according to claim 1,
wherein the laser power control unit (200) is configured to control the output of the laser with base power.

7. A welding method comprising:
a step of irradiating a laser with peak power to a welding portion (W); and
a step of irradiating a laser with base power to the welding portion (W),
**characterised in that** the laser with peak power has an output forming a keyhole (K) in the welding portion (W), and
the laser with base power has an output so that penetration is not formed in the welding portion (W),
wherein the laser with base power has an output allowing the welding portion (W) to remain in a liquid state,
wherein the welding device further comprises
an inspection unit (300) configured to inspect a welding condition in the welding portion during welding or after completion of welding by the welding device (10), and
wherein the laser power control unit (200) is configured to control the output of the laser with base power according to the welding condition inspection information provided from the inspection unit (300).

8. A battery manufacturing device comprising the welding device (10) according to any one of claims 1 to 6.

9. A vehicle manufacturing device comprising the welding device (10) according to any one of claims 1 to 6.

## Patentansprüche

1. Schweißvorrichtung (10), umfassend:
eine Laserbestrahlungseinheit (100) zur Laserbestrahlung; und
eine Laserleistungssteuereinheit (200) zum Ansteuern der Laserbestrahlungseinheit (100), um einen Laser mit Spitzenleistung und einen Laser mit Grundleistung auf einen Schweißbereich (W) zu strahlen,
**dadurch gekennzeichnet, dass** der Laser mit Spitzenleistung eine Ausgangsleistung hat, mit welcher eine Dampfkapillare (K) in dem Schweißbereich (W) ausgebildet werden kann, und
der Laser mit Grundleistung eine Ausgangsleistung hat, mit welcher kein Eindringen in den Schweißbereich (W) erfolgt,
wobei der Laser mit Grundleistung eine Ausgangsleistung hat, mit welcher der Schweißbereich (W) in einem flüssigen Zustand gehalten werden kann,
wobei die Schweißvorrichtung (10) ferner eine Prüfeinheit (300) zum Überprüfen einer Schweißbedingung im Schweißbereich während des Schweißens oder nach Abschluss des Schweißens durch die Schweißvorrichtung (10) umfasst, und
wobei die Laserleistungssteuereinheit (200) dazu ausgelegt ist, die Ausgangsleistung des Lasers mit Grundleistung gemäß den von der Prüfeinheit (300) bereitgestellten Schweißbedingungsprüfinformationen zu steuern.

2. Schweißvorrichtung nach Anspruch 1,
wobei die Laserleistungssteuereinheit (200) dazu ausgelegt ist, die Laserbestrahlungseinheit so anzusteuern, dass der Schweißbereich (W) in einem flüssigen Zustand gehalten wird.

3. Schweißvorrichtung nach Anspruch 1,
wobei die Laserleistungssteuereinheit (200) dazu ausgelegt ist, die Laserbestrahlungseinheit (100) anzusteuern, um den Laser mit Spitzenleistung und den Laser mit Grundleistung abwechselnd auf den Schweißbereich (W) zu strahlen.

4. Schweißvorrichtung nach Anspruch 1,
wobei die Laserleistungssteuereinheit (200) dazu ausgelegt ist, die Impulsbreite des Lasers mit Grundleistung zu steuern.

5. Schweißvorrichtung nach Anspruch 1,
wobei die Laserleistungssteuereinheit (200) dazu ausgelegt ist, die Impulsfrequenz des Lasers mit Grundleistung zu steuern.

6. Schweißvorrichtung nach Anspruch 1,
wobei die Laserleistungssteuereinheit (200) dazu ausgelegt ist, die Ausgangsleistung des Lasers mit Grundleistung zu steuern.

7. Schweißverfahren, umfassend:
einen Schritt des Strahlens eines Lasers mit Spitzenleistung auf einen Schweißbereich (W); und
einen Schritt des Strahlens eines Lasers mit Grundleistung auf den Schweißbereich (W),
**dadurch gekennzeichnet, dass** der Laser mit Spitzenleistung eine Ausgangsleistung hat, mit welcher eine Dampfkapillare (K) in dem Schweißbereich (W) ausgebildet werden kann, und
der Laser mit Grundleistung eine Ausgangsleistung hat, mit welcher kein Eindringen in den Schweißbereich (W) erfolgt,
wobei der Laser mit Grundleistung eine Ausgangsleistung hat, mit welcher der Schweißbereich (W) in einem flüssigen Zustand gehalten werden kann,
wobei die Schweißvorrichtung (10) ferner eine Prüfeinheit (300) zum Überprüfen einer Schweißbedingung im Schweißbereich während des Schweißens oder nach Abschluss des Schweißens durch die Schweißvorrichtung (10) umfasst, und
wobei die Laserleistungssteuereinheit (200) dazu ausgelegt ist, die Ausgangsleistung des Lasers mit Grundleistung gemäß den von der Prüfeinheit (300) bereitgestellten Schweißbedingungsprüfinformationen zu steuern.

8. Batterieherstellungsvorrichtung, umfassend die Schweißvorrichtung (10) nach einem der Ansprüche 1 bis 6.

9. Fahrzeugherstellungsvorrichtung, umfassend die Schweißvorrichtung (10) nach einem der Ansprüche 1 bis 6.

## Revendications

1. Un dispositif de soudage (10) comprenant :
une unité d'irradiation laser (100) configurée pour irradier un laser ; et
une unité de commande de puissance laser (200) configurée pour commander l'unité d'irradiation laser (100) pour irradier un laser avec une puissance de crête et un laser avec une puissance de base sur une partie de soudage (W),
**caractérisé en ce que** le laser avec une puissance de crête a une sortie capable de former un capillaire (K) dans la partie de soudage (W), et
le laser avec une puissance de base a une sortie avec laquelle aucune pénétration n'est formée dans la partie de soudage (W),
dans lequel le laser avec une puissance de base a une sortie capable de permettre à la partie de soudage (W) de rester dans un état liquide,
dans lequel le dispositif de soudage (10) comprend en outre une unité d'inspection (300) configurée pour inspecter une condition de soudage dans la partie de soudage pendant le soudage ou après l'achèvement du soudage par le dispositif de soudage (10), et
dans lequel l'unité de commande de puissance laser (200) est configurée pour commander la sortie du laser avec une puissance de base selon les informations d'inspection de condition de soudage fournies par l'unité d'inspection (300).

2. Le dispositif de soudage selon la revendication 1,
dans lequel l'unité de commande de puissance laser (200) est configurée pour commander l'unité d'irradiation laser de sorte que la partie de soudage (W) reste dans un état liquide.

3. Le dispositif de soudage selon la revendication 1,
dans lequel l'unité de commande de puissance laser (200) est configurée pour commander l'unité d'irradiation laser (100) pour irradier alternativement le laser avec une puissance de crête et le laser avec une puissance de base sur la partie de soudage (W).

4. Le dispositif de soudage selon la revendication 1,
dans lequel l'unité de commande de puissance laser (200) est configurée pour commander la largeur d'impulsion du laser avec une puissance de base.

5. Le dispositif de soudage selon la revendication 1,
dans lequel l'unité de commande de puissance laser (200) est configurée pour commander la fréquence d'impulsion du laser avec une puissance de base.

6. Le dispositif de soudage selon la revendication 1,
dans lequel l'unité de commande de puissance laser (200) est configurée pour commander la sortie du laser avec une puissance de base.

7. Un procédé de soudage comprenant :
une étape d'irradiation d'un laser avec une puissance de crête sur une partie de soudage (W) ; et
une étape d'irradiation d'un laser avec une puissance de base sur la partie de soudage (W),
**caractérisé en ce que** le laser avec une puissance de crête a une sortie formant un capillaire (K) dans la partie de soudage (W), et
le laser avec une puissance de base a une sortie de sorte qu'aucune pénétration n'est formée dans la partie de soudage (W),
dans lequel le laser avec une puissance de base a une sortie permettant à la partie de soudage (W) de rester dans un état liquide,
dans lequel le dispositif de soudage comprend en outre
une unité d'inspection (300) configurée pour inspecter une condition de soudage dans la partie de soudage pendant le soudage ou après l'achèvement du soudage par le dispositif de soudage (10), et
dans lequel l'unité de commande de puissance laser (200) est configurée pour commander la sortie du laser avec une puissance de base selon les informations d'inspection de condition de soudage fournies par l'unité d'inspection (300).

8. Un dispositif de fabrication de batterie comprenant le dispositif de soudage (10) selon l'une quelconque des revendications 1 à 6.

9. Un dispositif de fabrication de véhicule comprenant le dispositif de soudage (10) selon l'une quelconque des revendications 1 à 6.
